# EUROPÄISCHE PATENTSCHRIFT

(11) **EP 2 885 961 B1**
(45) Veröffentlichungstag und Bekanntmachung des Hinweises auf die Patenterteilung: **13.12.2017**
(21) Anmeldenummer: 14187775.3
(22) Anmeldetag: 06.10.2014
(51) Int. Cl.: A01D 41/127

(54) **Selbstfahrende Erntemaschine**
Self-propelled harvester
Moissonneuse automotrice

(30) Priorität: 18.12.2013 DE 102013114354
(43) Veröffentlichungstag der Anmeldung: 24.06.2015
(73) Patentinhaber: CLAAS Selbstfahrende Erntemaschinen GmbH, 33428 Harsewinkel (DE)
(72) Erfinder: Behnke, Willi, 33803 Steinhagen (DE); Kriebel, Bastian, 48155 Münster (DE)

(56) Entgegenhaltungen:
- EP-A1- 2 377 385
- GB-A- 1 183 808

## Beschreibung

Die vorliegende Erfindung betrifft eine selbstfahrende Erntemaschine gemäß dem Oberbegriff von Anspruch 1.

Bei selbstfahrenden Erntemaschinen und hier insbesondere bei Mähdreschern besteht grundsätzlich das Risiko eines Erntegutstaus an einem oder mehreren der Arbeitsorgane der Erntemaschine. Ein solcher Erntegutstau führt, wenn er auftritt, zu einer Verstopfung an den betroffenen Arbeitsorganen durch das Erntegut, welche Verstopfung in der Regel erst manuell und damit langwierig behoben werden muss. Neben dem eigentlichen Zeitaufwand für das Entfernen des verstopfenden Ernteguts können durch das aufgestaute Erntegut auch Beschädigungen an den Arbeitsorganen selbst, an deren Antrieben oder an sonstigen Teilen der Erntemaschine entstehen.

Prinzipiell kann ein solcher Erntestau dann entstehen, wenn an ein Arbeitsorgan für eine bestimmte Zeit mehr Erntegut zugeführt wird, als dort abgearbeitet und weitertransportiert werden kann. Dabei richtet sich die Zeitdauer, ab welcher ein Erntegutstau auftritt, nach der Nettozufuhr von Erntegut, also der Differenz zwischen der zugeführten und der weitertransportierten Menge an Erntegut. Dies entspricht dem Unterschied zwischen dem Erntegutstrom zu dem jeweiligen Arbeitsgerät und dem Erntegutstrom von dem jeweiligen Arbeitsgerät. Ein Erntegutstau kann somit auch schleichend eintreten, wenn sich nämlich an einem Arbeitsorgan über eine längere Zeit auch eine u. U. verhältnismäßig geringe Nettozufuhr an Erntegut akkumuliert.

Aus dem Stand der Technik und speziell aus der EP 2 377 385 A1, von welcher die vorliegende Erfindung ausgeht, ist ein Verfahren zur Verhinderung eines sich auf diese Weise anbahnenden Erntegutstaus bekannt. Das hier gezeigte Verfahren wertet speziell die Drehzahl eines potenziell von einem Erntegutstau betroffenen Arbeitsorgans einer selbstfahrenden Erntemaschine aus, wobei das Absinken der Drehzahl als Indiz für eine Höherbelastung durch Erntegut und einen sich anbahnenden Erntegutstau gewertet wird. Bei Absinken dieser Drehzahl unter einen ersten Schwellwert wird zunächst eine Maßnahme ergriffen, welche den Erntegutstrom an das gefährdete Arbeitsorgan vermindert. Dies betrifft etwa die Vorfahrgeschwindigkeit oder ein dem gefährdeten Arbeitsorgan fördertechnisch vorgelagertes Arbeitsorgan, nicht aber den Betrieb des gefährdeten Arbeitsorgans selbst. Wenn die Drehzahl des gefährdeten Arbeitsorgans noch stärker und sogar unter einen weiteren Grenzwert sinkt, wird der Erntegutstrom an das gefährdete Arbeitsorgan vollständig unterbunden. Erst wenn die Drehzahl des gefährdeten Arbeitsorgans immer noch weiter sinkt, wird das gefährdete Arbeitsorgan abgeschaltet.

Zwar vermag der aus diesem Stand der Technik bekannte Ansatz einen sich auf eine solche Weise anbahnenden Erntegutstau potenziell zu verhindern, ein Erntegutstau kann aber auch durch eine Fehlbedienung auftreten. Und zwar kann im Betrieb mit einer starken Motorbelastung der Erntemaschine und damit einer starken "Motordrückung" - welcher Betriebszustand grundsätzlich im ökonomischen Sinne effektiv und daher erwünscht ist - ein Motorstillstand dann auftreten, wenn die Motorbelastung sich noch weiter erhöht, z.B. durch eine plötzliche Erhöhung des Bestandsdichte. Die durch die Mehrbelastung verursachte weitere Drehzahlverminderung kann dann zu einem Abwürgen des Motors führen. Um einen sich durch die Drehzahlverminderung anbahnenden Motorstillstand zu vermeiden, kann der Bediener der Erntemaschine die Maßnahme ergreifen, das Dreschwerk der Erntemaschine abzuschalten, wobei gleichzeitig auch der Einzug der Vorsatzanordnung der Erntemaschine abgeschaltet wird.

Obwohl die Vorsatzanordnung bzw. deren Einzug und das Dreschwerk also gleichzeitig abgeschaltet werden, weisen beide ein jeweils unterschiedliches Nachlaufverhalten auf, wobei regelmäßig der Nachlauf der Vorsatzanordnung jedenfalls in dem Sinne größer als der des Dreschwerkes ist, dass die von der Vorsatzanordnung an das Dreschwerk zugeführte Menge an Erntegut langsamer abnimmt als die aus dem Dreschwerk weiterverarbeitete Menge an Erntegut. Folglich kann auch durch dieses Verhalten bei gleichzeitigem Abschalten des Dreschwerks und der Vorsatzanordnung ebenfalls ein Erntegutstau insbesondere im Dreschwerk auftreten.

Aber selbst wenn kein Erntegutstau im eigentlichen Sinne durch dieses unterschiedliche Nachlaufverhalten auftritt, so kann dennoch ein Zustand eintreten, in welchem des Dreschwerk und die Vorsatzanordnung abgeschaltet sind und eine unzulässig große Menge an Erntegut in der Erntemaschine verbleibt. In so einem Fall können Schwierigkeiten bei einem Neustart der Arbeitsorgane und speziell des Dreschwerks entstehen, da nun nicht nur die Arbeitsorgane selbst, sondern auch das Erntegut, welches sich an ihnen angelagert hat, zum Starten bewegt werden müssen. Solange die Arbeitsorgane in Bewegung sind, bilden sie eine Schwungmasse zum Verarbeiten oder Bewegen des Ernteguts, sodass von dem Motor im Wesentlichen nur die Leistung bereitgestellt werden muss, um das System am Laufen zu halten bzw. das Leistungsdelta für Belastungssteigerungen zur Verfügung zu stellen. Um aus dem Stillstand heraus diesen Zustand wieder zu erreichen, kann aber u. U. entweder die bereitstellbare Leistung des Motors selbst oder aber die z.B. durch eine Riemenkupplung zu diesem Zweck übertragbare Leistung nicht ausreichen. Ebenso wie beim oben beschriebenen Erntegutstau im engeren Sinne kann also auch in so einem, durch eine wie oben beschriebene Fehlbedienung ausgelösten Fall ein zeitaufwendiges und daher kostspieliges Entfernen von Erntegut aus der Erntemaschine erforderlich sein.

Vor diesem Hintergrund besteht die Aufgabe der Erfindung darin, eine bekannte selbstfahrende Erntemaschine derart auszugestalten und weiterzubilden, dass das Risiko eines Erntegutstaus oder einer für einen Neustart zu großen Ansammlung von Erntegut in der Erntemaschine als Folge einer Fehlbedienung verringert wird.

Das genannte Problem wird bei einer selbstfahrenden Erntemaschine mit den Merkmalen des Oberbegriffs von Anspruch 1 durch die Merkmale des kennzeichnenden Teils von Anspruch 1 gelöst.

Wesentlich ist die Erkenntnis, dass eine übermäßige Ansammlung von Erntegut in der Erntemaschine und speziell im Dreschkorb des Dreschwerks der Erntemaschine nach einem Abschaltvorgang des Dreschwerks dadurch vermieden werden kann, dass die benutzerausgelöste Abschaltung des Dreschwerks und ggf. der Vorsatzanordnung in Abhängigkeit von einem aktuellen Erntegutverarbeitungszustand erfolgt. Diese Abhängigkeit kann insbesondere in einem verzögerten Abschalten des Dreschwerks oder etwa in einem besonders raschen Abschalten der Vorsatzanordnung oder einer Kombination beider Maßnahmen bestehen. Wenn - abweichend zum Dreschwerk - die Vorsatzanordnung sofort und vor allem mit verkürzter Nachlaufzeit abgeschaltet wird, so kann während des bewusst hervorgerufenen Nachlaufs des Dreschwerks das Erntegut aus dem Bereich des Dreschwerks und der fördertechnisch nachgeordneten Arbeitsorgane abtransportiert werden, ohne dass gleichzeitig von der Vorsatzanordnung zusätzliches Erntegut weiter zugeführt wird. Auf diese Weise wird eine jedenfalls ausreichende Leerung der Erntemaschine von Erntegut bei einem Abschalten des Dreschwerks erreicht.

Hier ist der Begriff des Erntegutverarbeitungszustands weit aufzufassen. Eine Vielzahl von Größen, zu denen unten stehend noch eine Vielzahl bevorzugter Beispiele genannt und erläutert wird, kann dabei - mittelbar oder unmittelbar - darüber Aufschluss geben, wie groß der Erntegutstrom in der Erntemaschine ist, wie viel bzw. was für eine Menge an Erntegut sich gerade in der Erntemaschine befindet und durch sie verarbeitet wird und wie das Erntegut in der Erntemaschine verteilt ist. Neben dem Erntegut kann auch das Korngut im engeren Sinne berücksichtigt werden.

Diese Größen zum Erntegutverarbeitungszustand können entsprechend an einer oder an mehreren Stellen entlang des Weges des Erntegutstroms oder einer seiner Teilströme durch die Erntemaschine ermittelt werden. Es kann sich also beispielhaft sowohl um eine bestimmte Menge an Erntegut, messbar in Gewichtseinheiten, als auch um einen bestimmten Durchsatz an Erntegut des Erntegutstroms handeln, welcher wiederum auch als Volumeneinheit pro Zeiteinheit ausgedrückt werden kann. Ebenso kann etwa aus dem Grad der Belastung eines Motors auf die Menge an verarbeiteten oder beförderten Erntegut geschlossen werden. Aus diesem Erntegutverarbeitungszustand, welcher sich sowohl aus einer einzelnen solchen Größe oder aus einer Zusammenschau mehrerer solcher Größen bestimmen kann, kann z.B. geschlussfolgert werden, eine wie lange Verzögerung beim Abschalten des Dreschwerks angemessen ist, um eine Ansammlung von Erntegut speziell in dem Dreschwerk beim Abschalten zu vermeiden.

Zwar kann das demgegenüber bevorzugt sofortig erfolgende Abschalten der Vorsatzanordnung mit dem obigen Nachlauf dazu führen, dass speziell bei einer Weiterfahrt der Erntemaschine durch Bestand dieser Bestand nicht geerntet werden kann, sondern vielmehr verloren geht. Dieser Verlust an Erntegut wiegt aber deutlich weniger schwer als ein potenziell mehrstündiger Ausfall der Erntemaschine, wenn diese durch einen Erntegutstau verstopft ist.

Besonders vorteilhaft ist es hier, wenn die Abhängigkeit des Abschaltens von dem aktuellen Erntegutverarbeitungszustand die Dauer bis zum Beginn und/oder Abschluss des Abschaltvorgangs beeinflusst oder bestimmt. Daher ist die Steueran-ordnung erfindungsgemäß dazu eingerichtet, einen Abschaltzeitpunkt des Dreschwerks und/oder der Vorsatzanordnung auf das Bedienereignis in Abhängigkeit von dem aktuellen Erntegutverarbeitungszustand zu bestimmen.

Ein relevanter Indikator des Erntegutverarbeitungszustands im obigen Sinne ist die Erntegutmenge, welche von einem Schneidwerk und einem Schrägförderer der Vorsatzanordnung dem Dreschwerk in einem Zeitintervall zugeführt wird. Sie entspricht dem Volumen des Erntegutstroms an dieser Stelle und kann auch als Förderzuführrate bezeichnet werden. Die Förderzuführrate bestimmt sich auch nach dem Volumen des Erntegutstroms an dieser Stelle. Die bevorzugte Ausgestaltung stützt die Beurteilung des Erntegutzustands insbesondere auf diese Größe.

Vorzugsweise basiert der Erntegutverarbeitungszustand auf einem Vergleich der Förderzuführrate der Vorsatzanordnung mit einer Erntegutbewegungsrate ab dem Dreschwerk, vorzugsweise, wobei die Steueranordnung dazu eingerichtet ist, auf das Bedienereignis das Dreschwerk verzögert abzuschalten, wenn die Förderzuführrate größer ist als die Erntegutbewegungsrate ab dem Dreschwerk. Diese bevorzugte Ausgestaltung sieht nun vor, für eine Bewertung des Erntegutverarbeitungszustands nicht nur die obige Förderzuführrate der Vorsatzanordnung als solche zu betrachten, sondern diese mit der Erntegutmenge bzw. dem Erntegutstrom in Bezug zu setzen, welche in demselben Zeitintervall ab dem Dreschwerk in der Erntemaschine weitertransportiert wird und welche auch als Erntegutbewegungsrate bezeichnet wird. An dieser Stelle kann das Erntegut auch in mehreren Teilströmen herausgeführt werden, sodass für diese Erntegutbewegungsrate einer oder mehrere dieser Teilströme betrachtet werden können. Erst wenn die Förderzuführrate diese Erntegutbewegungsrate übersteigt, ist ein verzögertes Abschalten des Dreschwerks vorteilhafterweise angezeigt.

Vorzugsweise ist die Steueranordnung dazu eingerichtet, einen Schnellstoppvorgang der Vorsatzanordnung, vorzugsweise bei Auftreten des Bedienereignisses, auszulösen, insbesondere, wobei der Erntegutverarbeitungszustand auf der Förderzuführrate unter Berücksichtigung des Schnellstoppvorgangs basiert. Demgemäß wiederum ist ein Schnellstoppvorgang für die Vorsatzanordnung und hier speziell das Schneidwerk vorgesehen. Durch einen solchen Schnellstoppvorgang kann die Vorsatzanordnung besonders schnell und damit ohne Nachlauf oder mit einem besonders kurzen Nachlauf gestoppt werden. Auf diese Weise wird nicht einfach nur gewartet, bis eine von ihrem Antrieb getrennte Vorsatzanordnung durch Reibung etc. zum Stillstand kommt, sondern es kann vielmehr aktiv, z.B. durch Bremsung, die Dauer des Abschaltens der Vorsatzanordnung verkürzt werden. Bei der Bestimmung der obigen Förderzuführrate kann auch die Wirkung eines solchen Schnellstoppvorgangs berücksichtigt werden.

Bevorzugt weist die Erntemaschine eine Antriebsanordnung zum Vortrieb der Erntemaschine und zum Antreiben des Dreschwerks und der Vorsatzanordnung auf und wobei die Steueranordnung dazu eingerichtet ist, bei Feststellung einer Antriebsüberlast den Schnellstoppvorgang auszulösen. Ebenso bevorzugt weist die Antriebsanordnung einen Motor auf und wobei die Steueranordnung dazu eingerichtet ist, bei Unterschreiten einer Schnellstopp-Mindestdrehzahl durch den Motor und/oder bei einem Abschalten des Motors den Schnellstoppvorgang auszulösen. Weiterhin bevorzugt weist die Antriebsanordnung zum Antreiben des Dreschwerks eine Riemenkupplung auf und wobei die Steueranordnung dazu eingerichtet ist, den Schnellstoppvorgang auszulösen, wenn ein Schlupf der Riemenkupplung einen Schlupfgrenzwert überschreitet. Diese bevorzugten Ausführungsformen sehen ein Auslösen dieses Schnellstoppvorgangs der Vorsatzanordnung - ggf. unabhängig von einem benutzerausgelösten Abschalten des Dreschwerks - auch dann vor, wenn ein Stillstand des Dreschwerks oder des Motors wegen Überlastung insbesondere des Dreschwerks durch zu viel Erntegut in der Erntemaschine droht. Auf diese Weise wird ein solcher Stillstand durch Auslösen des Schnellstoppvorgangs auf eine Art und Weise abgewandt, welcher u. U. das Abschalten des Dreschwerks durch den Bediener entbehrlich macht. Dabei betreffen diese Ausführungsformen jeweils bestimmte Sonderfälle, in denen eine solche drohende Überlastung identifiziert werden kann. Vorzugsweise basiert der Erntegutverarbeitungszustand darauf, wie lange vor dem Bedienereignis die Vorsatzanordnung außerhalb einer Arbeitsposition und/oder abgeschaltet war, vorzugsweise, wobei die Steueranordnung dazu eingerichtet ist, die Förderzuführrate auf einen Konstantwert, vorzugsweise Null, anzusetzen, wenn die Vorsatzanordnung eine Mindestauszeit vor dem Bedienereignis außerhalb der Arbeitsposition und/oder abgeschaltet war, insbesondere, ein verzögertes Abschalten des Dreschwerks zu unterdrücken. Diese bevorzugte Ausgestaltung gilt Situationen, in welchen die Förderzuführrate zum Dreschwerk erst gar nicht ermittelt werden muss, sondern schon von vornherein auf Null angesetzt werden kann. Wenn nicht auch eine verzögerte Abschaltung des Dreschwerks wegen zu viel Erntegut in der Erntemaschine - wie unten stehend beschrieben - in Betracht kommt, kann dann ein verzögertes Abschalten des Dreschwerks sogar kategorisch unterdrückt werden. Solche Situationen liegen etwa dann vor, wenn zum Zeitpunkt des Bedienereignisses, welches das Abschalten des Dreschwerks bewirken soll, die Vorsatzanordnung für eine ausreichend lange Zeit bereits abgeschaltet war oder sich außerhalb einer Arbeitsposition befand.

Andererseits gibt es auch Situationen, in denen das Dreschwerk in jedem Falle ohne jede Verzögerung abgeschaltet werden sollte, um Schäden zu vermeiden, worauf eine bevorzugte Ausführungsform abzielt, bei der die Steueranordnung dazu eingerichtet ist, das Dreschwerk unverzüglich abzuschalten, wenn bei einem Wiedereinschalten des Dreschwerks das Dreschwerk stehen bleibt, insbesondere, wenn bei dem Wiedereinschalten des Dreschwerks ein Schlupf der Riemenkupplung einen Wiedereinschaltgrenzwert übersteigt. Dies gilt etwa dann, wenn bei dem Versuch des Wiedereinschaltens des Dreschwerks eine Blockierung vorliegt oder das Wiedereinschalten aus einem anderen Fehler nicht möglich ist.

Schließlich betreffen die bevorzugten Ansprüche 4 bis 8 eine Bewertung des Erntegutverarbeitungszustands basierend auf einer Erntegutmenge in der Erntemaschine, wobei hier die Ansprüche 5 bis 8 die Auswertung spezieller Indikatoren betreffen, welche Aufschluss über die Erntegutmenge in diesem Sinne in der Erntemaschine geben können und auf diese Weise eine Basis dafür bieten, unter welchen Bedingungen z.B. ein verzögertes Abschalten des Dreschwerks ratsam ist.

Weitere Einzelheiten, Merkmale, Ziele und Vorteile der vorliegenden Erfindung werden nachfolgend anhand der Zeichnung eines bevorzugten Ausführungsbeispiels erläutert. In der Zeichnung zeigt:
- Fig. 1: eine schematische Seitenansicht eines Mähdreschers als vorschlagsgemäße selbstfahrende Erntemaschine,
- Fig. 2a, b): eine Darstellung über der Zeit eines Erntegutstaus, wie er bei einem Mähdrescher nach dem Stand der Technik auftreten kann und
- Fig. 3: ein beispielhaftes Ablaufdiagramm, welches eine Abhängigkeit des Abschaltens des Dreschwerks von dem Erntegutverarbeitungszustand verdeutlicht.

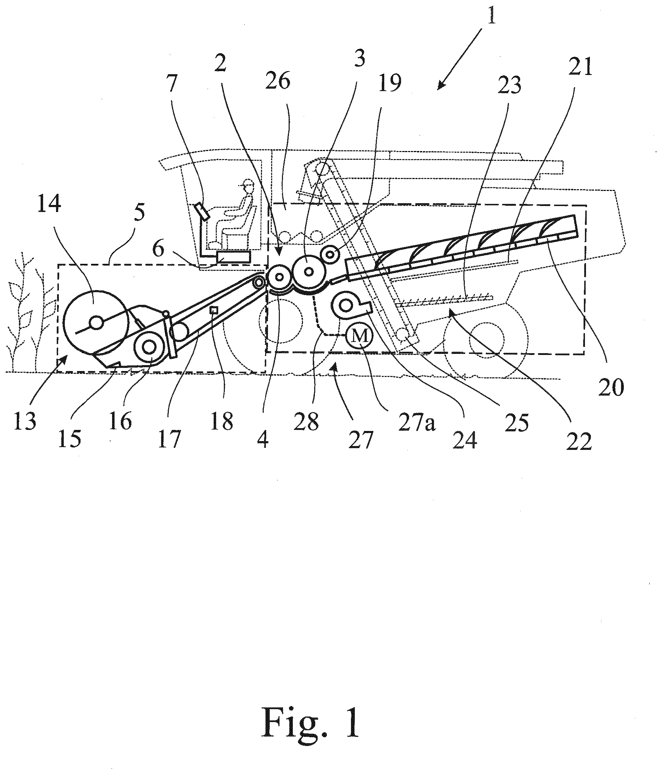

Die in der Fig. 1 dargestellte, vorschlagsgemäße selbstfahrende Erntemaschine, bei der es sich hier beispielhaft um einen Mähdrescher 1 handelt, weist ein Dreschwerk 2 auf. Das Dreschwerk 2 besteht hier aus den Dreschtrommeln 3 und dem Dreschkorb 4. Die vorschlagsgemäße Erntemaschine weist ferner eine dem Dreschwerk 2 fördertechnisch vorgelagerte Vorsatzanordnung 5 und eine Steueranordnung 6 auf, welche dazu eingerichtet ist, auf ein Bedienereignis das Dreschwerk 2 und ggf. die Vorsatzanordnung 5 abzuschalten. Das bedeutet, dass das Dreschwerk 2 auf das Bedienereignis in jedem Falle abgeschaltet wird, wobei zusätzlich auch die Vorsatzanordnung 5 abgeschaltet werden kann. Der Zusammenhang zwischen dem Abschalten des Dreschwerks 2 und dem Abschalten der Vorsatzanordnung 5 kann dabei entweder fest von der Steueranordnung 6 vorgegeben sein, kann aber auch dynamisch von dem speziellen Bedienereignis oder anderen Umständen abhängen. Insbesondere kann das Abschalten des Dreschwerks 2 und das Abschalten der Vorsatzanordnung 5 zeitlich unterschiedlich erfolgen. Das Abschalten des Dreschwerks 2 bedeutet hier, eine Bewegung der Dreschtrommeln 3 anzuhalten.

Bei der Steueranordnung 6 kann es sich sowohl um eine elektronische Steuerung, ggf. mit einer Recheneinheit, als auch um eine einfache elektromechanische Schaltanordnung handeln. Bei dem Bedienereignis handelt es sich um ein von einem Bediener ausgelöstes Ereignis, also keine interne Zustandsänderung der Steueranordnung 6, durch welche der Bediener mittelbar oder unmittelbar das Dreschwerk 2 abschalten möchte. Ein solches Bedienereignis kann von dem Bediener auf grundsätzliche beliebige Art und Weise und so z.B. durch eine Tastenbetätigung an einer mit der Steueranordnung 6 verbundenen Bedieneinheit 7 erzeugt werden.

Die vorschlagsgemäße Erntemaschine ist nun dadurch gekennzeichnet, dass das Abschalten in Abhängigkeit von einem aktuellen Erntegutverarbeitungszustand erfolgt. Diese Abhängigkeit kann dabei das Abschalten des Dreschwerks 2, das Abschalten der Vorsatzanordnung 5 oder beide Abschaltvorgänge betreffen. Diese Abhängigkeit kann auch die Art der Abschaltung z.B. des Dreschwerks 2 betreffen, wenn also rein grundsätzlich etwa zwischen einer Sofort-Abschaltung, wie etwa bei einer Notabschaltung, und einer normalen Abschaltung unterschieden wird und hier potenziell verschiedene Mechanismen eingesetzt werden. Neben diesem qualitativen Unterschied können auch quantitative Parameter des Abschaltvorgangs von diesem aktuellen Erntegutverarbeitungszustand abhängig sein.

Besonders vorteilhaft ist es hier, wenn die Abhängigkeit des Abschaltens von dem aktuellen Erntegutverarbeitungszustand die Dauer bis zum Beginn und/oder Abschluss des Abschaltvorgangs beeinflusst oder bestimmt. Daher ist die Steueranordnung 6 erfindungsgemäß dazu eingerichtet, einen Abschaltzeitpunkt des Dreschwerks 2 und/oder der Vorsatzanordnung 5 auf das Bedienereignis in Abhängigkeit von dem aktuellen Erntegutverarbeitungszustand zu bestimmen. Dieser Abschaltzeitpunkt kann entweder unmittelbar als absoluter Zeitpunkt auf eine beliebige Art und Weise oder auch mittelbar durch einen Versatz oder eine Zeitverzögerung, bevorzugt gerechnet vom Bedienereignis an, bestimmt werden.

Vorteile ergeben sich auch, wenn das Abschalten zwar in Abhängigkeit von dem aktuellen Erntegutverarbeitungszustand der Erntemaschine, aber unabhängig von einer Vorfahrgeschwindigkeit der Erntemaschine erfolgt. Hieraus folgt, dass vorzugsweise die Vorfahrgeschwindigkeit der Erntemaschine nicht unter den Begriff des Erntegutverarbeitungszustands fällt und damit außerhalb ist. Bevorzugt ist ebenso, dass bei dem Abschalten des Dreschwerks 2 und ggf. der Vorsatzanordnung 5 die Vorfahrtgeschwindigkeit der Erntemaschine im Wesentlichen konstant bleibt. Der oben beschriebene Verlust an Bestand durch diese Weiterfahrt wird dabei in Kauf genommen.

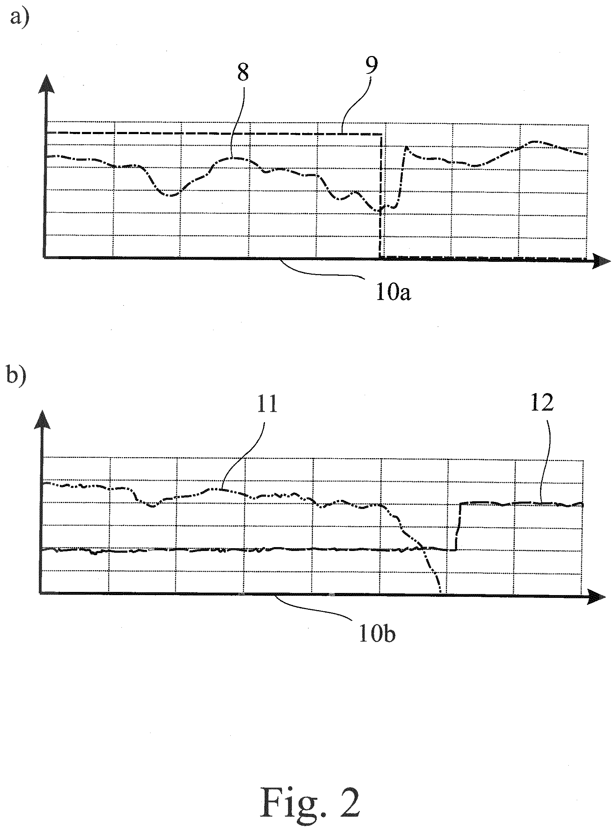

In den Fig. 2a und 2b ist dargestellt, wie bei einer Erntemaschine aus dem Stand der Technik, bei der auf ein Bedienereignis das Dreschwerk 2 stets gleich abgeschaltet wird, und zwar so schnell wie möglich ohne das Vorsehen einer zusätzlichen Verzögerung, ein Erntegutstau und speziell eine Verstopfung des Dreschkorbs der Erntemaschine entstehen kann. Die Fig. 2a gibt dabei eine Motordrehzahl 8 der Erntemaschine und einen Dreschwerkschaltstatus 9 über einer Zeitachse 10a an, wohingegen die Fig. 2b die Dreschtrommeldrehzahl 11 und den Dreschkorbstatus 12 ebenfalls über einer Zeitachse 10b angibt. Der Zeitverlauf ist in der Fig. 2a und 2b parallel dargestellt, sodass jeweils vertikal übereinanderliegende Positionen der Zeitachsen 10a, b gleichzeitigen Ereignissen entsprechen.

Die dargestellte Situation entspricht einer bereits zu Beginn der Zeitachsen 10a, b bestehenden hohen Motorauslastung, wie sie etwa beim Fahren durch dichten Bestand eintritt und welche - wie bereits erläutert - grundsätzlich aus wirtschaftlichen Erwägungen auch gewünscht ist. Bei Eintritt einer weiteren Erhöhung der Motorauslastung sinkt die Motordrehzahl 8 noch weiter, wodurch ein Motorstillstand droht. Um dies zu vermeiden, führt der Bediener eine Fehlbedienung aus, indem er ein Abschalten des Dreschwerks 2 durch ein Bedienereignis auslöst. Dies führt - ohne zusätzliche Verzögerung - zu einem in der Fig. 2a dargestellten Wechsel des Dreschwerkstatus 9. Grundsätzlich führt dies auch zu einem Abschalten der Vorsatzanordnung 5, wodurch die Zufuhr von Erntegut an das Dreschwerk 2 beendet wird. Jedoch weist die Vorsatzanordnung 5 und damit diese Zufuhr einen Nachlauf auf, welcher länger als der in der Fig. 2b anhand der Dreschtrommeldrehzahl 11 dargestellte Nachlauf des Dreschwerks 2 ist. Das Ergebnis ist jedenfalls, dass nachdem die Dreschtrommeldrehzahl 11 auf Null gefallen ist, das Dreschwerk 2 also bereits abgeschaltet wurde, der Dreschkorb 4 vom nachlaufenden Erntegut aufgedrückt wird, wie aus der in der Fig. 2b dann nachfolgend dargestellten Änderung des Dreschkorbstatus 12 hervorgeht. Die somit entstandene Verstopfung in der Erntemaschine erfordert eine langwierige Beseitigung.

Wieder zurückkommend auf die vorschlagsgemäße Erntemaschine, weist bei dieser bevorzugt und gemäß der Darstellung des Mähdreschers 1 in der Fig. 1 die Vorsatzanordnung 5 ein Schneidwerk 13 auf, welches Schneidwerk 13 hier wiederum beispielhaft eine Haspel 14, Messerbalken 15 und eine Einzugsschnecke 16 umfasst. Ebenso weist die Vorsatzanordnung 5 vorzugsweise auch einen mit dem Schneidwerk 13 fördertechnisch gekoppelten Schrägförderer 17 auf. Die fördertechnische Kopplung bedeutet hier, dass das von dem Schneidwerk 13 abgeschnittene und eingezogene Erntegut als Erntegutstrom von dem Schrägförderer 17 weiter in die Erntemaschine und speziell zu dem Dreschwerk 2 der Erntemaschine gefördert wird.

An dem Schrägförderer 17 ist ein Schichthöhensensor 18 angeordnet, welcher in Abhängigkeit von der Menge des zugeführten Ernteguts die Auslenkung des Schrägförderers 17 erfasst und ein entsprechendes Schichthöhensignal erzeugt. An verschiedenen anderen Stellen der Erntemaschine können weitere Sensoren angeordnet sein, z.B. Bildkameras oder Körperschallsensoren, welche ebenfalls das Erntegut, den Erntegutstrom an der jeweiligen Stelle oder Teilströme des Erntegutstroms erfassen und ebenso ein entsprechendes Signal erzeugen. Denkbar sind auch Sensoren zum Erfassen einer Drehzahl oder eines Drehmoments an einer entsprechenden Vorrichtung.

Hier ist es weiter bevorzugt, dass der Erntegutverarbeitungszustand auf einer Förderzuführrate, vorzugsweise entsprechend einem Volumen des Erntegutstroms pro Zeiteinheit, der Vorsatzanordnung 5 zum Dreschwerk 2 basiert. Diese Förderzuführrate kann grundsätzlich beliebig aber insbesondere basierend auf dem Schichthöhensensor 18 ermittelt werden.

Wie ebenfalls aus der Fig. 1 hervorgeht, ist, in an sich bekannter Weise, in der Erntemaschine eine Umlenktrommel 19 vorgesehen, über welche der Erntegutstrom in die Trenneinrichtung 20 zum Abscheiden freibeweglicher Körner gelangt. Der Erntegutstrom gelangt weiter über den Rücklaufboden 21 zu einer Reinigungsvorrichtung 22 mit ggf. mehreren Siebebenen 23 und einem Gebläse 24 und von da aus über einen Kornelevator 25 zum Korntank 26. Speziell in diesem Bereich kann sich der Erntegutstrom in verschiedene Teilströme aufteilen, worauf aber hier nicht näher eingegangen wird.

Wie bereits angedeutet, kann ein Erntegutstau und eine Verstopfung des Dreschwerks 2 dann vermieden werden, wenn die Menge des dem Dreschwerk 2 zugeführten Ernteguts die aus dem Dreschwerk 2 wieder herausgeführte Menge an Erntegut nicht übersteigt, also der Erntegutstrom in das Dreschwerk 2 kleiner ist als der Erntegutstrom aus dem Dreschwerk 2 heraus bzw. als die Teilströme aus dem Dreschwerk 2 heraus. Ebenso wird ein Erntegutstau auch dann vermieden, wenn sich über einem Zeitfenster die Differenz zwischen dem hineinführenden Erntegutstrom und dem herausführenden Erntegutstrom ausmittelt. Umgekehrt besteht bei einer über einen bestimmten Zeitraum anhaltenden Nettoaufnahme von Erntegut im Dreschwerk 2 das Risiko, dass ohne verzögertes Abschalten des Dreschwerks 2 ein Erntegutstau auftritt. Daher ist es bevorzugt, dass der Erntegutverarbeitungszustand auf einem Vergleich der Förderzuführrate der Vorsatzanordnung 5 mit einer Erntegutbewegungsrate ab dem Dreschwerk 2 basiert. Unter der Erntegutbewegungsrate ab dem Dreschwerk 2 ist die zu der Förderzuführrate entsprechende Rate zu verstehen, welche Aufschluss darüber gibt, wie viel Erntegut aus dem Dreschwerk 2 pro Zeiteinheit wieder heraustritt. Diese Erntegutbewegungsrate kann aus dem Erntegut an einer dem Dreschwerk 2 fördertechnisch nachgelagerten Stelle oder aus den verschiedenen Teilströmen entsprechend ermittelt werden.

Folglich kann ein Vergleich der Förderzuführrate mit der Erntegutbewegungsrate Aufschluss darüber geben, ob das Dreschwerk 2 insgesamt Erntegut aufnimmt oder nicht. Dabei muss der Vergleich der Förderzuführrate mit der Erntegutbewegungsrate nicht auf den Vergleich eines Augenblickswertes beschränkt sein. Vielmehr kann der Vergleich auch auf einer Projektion der jeweiligen Rate in die Zukunft unter Berücksichtigung des Abschaltverhaltens und einer Summierung im Sinne einer Integralbildung beruhen. Es kann also so bestimmt werden, ob und inwiefern ausgehend von den aktuellen Verhältnissen und des charakteristischen Verhaltens während der Abschaltzeit insgesamt eine Nettoaufnahme von Erntegut im Dreschwerk 2 auftritt oder ob vorübergehend eine übermäßige Erntegutmenge im Dreschwerk 2 auftritt. Ebenso kann auch darauf abgestellt werden, ob und inwiefern innerhalb eines bestimmten vergangenen Zeitfensters eine Nettoaufnahme von Erntegut im Dreschwerk 2 erfolgt ist. Hier ist es weiter bevorzugt, dass die Steueranordnung 6 dazu eingerichtet ist, auf das Bedienereignis das Dreschwerk 2 verzögert abzuschalten, wenn die Förderzuführrate - vorzugsweise in diesem weiteren Sinne verstanden - größer ist als die Erntegutbewegungsrate ab dem Dreschwerk 2.

Besondere Vorteile ergeben sich, wenn die Erntemaschine in der Lage ist, die Vorsatzanordnung 5 mittels eines besonderen Schnellstoppvorgangs, welcher grundsätzlich auf unterschiedliche Art und Weise implementiert werden kann, abzuschalten. Dann ist es bevorzugt, dass die Steueranordnung 6 dazu eingerichtet ist, diesen Schnellstoppvorgang der Vorsatzanordnung 5 insbesondere bei Auftreten des Bedienereignisses auszulösen. Bevorzugt ist bei diesem Schnellstoppvorgang vorgesehen, dass die Vorsatzanordnung 5 erstens von einem entsprechenden Vorsatzantrieb ausgekuppelt wird und zweitens nach dem Auskuppeln abgebremst wird. Dieses Auskuppeln und Abbremsen kann im Wesentlichen gleichzeitig erfolgen und durch eine einzelne mechanische Verstellung ausgelöst werden, sodass hierzu keine Steuerlogik im eigentlichen Sinne erforderlich sein muss. Umgekehrt kann der Schnellstoppvorgang alternativ auch eine komplexe Abfolge über eine bestimmte Zeit umfassen.

Bezogen auf die obige Ermittlung der Förderzuführrate, ist es hier bevorzugt, dass der Erntegutverarbeitungszustand auf der Förderzuführrate unter Berücksichtigung des Schnellstoppvorgangs basiert. Mit anderen Worten kann die Wirkung des Schnellstoppvorgangs auf die Förderzuführrate insbesondere für den Vergleich mit der Erntegutbewegungsrate vor allem durch eine Projektion des zeitlichen Verlaufs berücksichtigt werden.

Ein Indikator für den Erntegutverarbeitungszustand stellt die Auslastung eines Antriebs der Erntemaschine dar. In der Regel ist in der Erntemaschine ein Motor, auf welchen unten stehend noch näher eingegangen wird, eines solchen Antriebs vorgesehen, welcher Motor mittelbar oder unmittelbar sowohl die Fahrt der Erntemaschine als auch die Arbeitsorgane der Erntemaschine antreibt. Hier können Veränderungen der Auslastung, insbesondere bei im Wesentlichen gleichbleibender Fahrgeschwindigkeit der Erntemaschine, auf Veränderungen des Erntegutverarbeitungszustands hindeuten, z.B. im Hinblick auf das Volumen des Erntegutstroms. Um einen Erntegutstau wie für Fig. 2a und 2b beschrieben bereits in der Anbahnung zu vermeiden und damit von vornherein die Wahrscheinlichkeit einer Notwendigkeit eines verzögerten Abschaltens des Dreschwerks 2 zu verringern oder jedenfalls die Dauer einer solchen Verzögerung zu reduzieren, sieht eine bevorzugte Ausführungsform vor, dass die Erntemaschine eine Antriebsanordnung 27 zum Vortrieb der Erntemaschine und zum Antreiben des Dreschwerks 2 und der Vorsatzanordnung 5 aufweist und dass die Steueranordnung 6 dazu eingerichtet ist, bei Feststellung einer Antriebsüberlast den Schnellstoppvorgang auszulösen. Auf diese Weise wird bereits eine Verminderung des an das Dreschwerk 2 zugeführten Erntegutstroms erreicht, noch bevor ein Bedienereignis zum Abschalten des Dreschwerks 2 eintritt.

Wie ebenfalls bereits im Zusammenhang mit den Fig. 2a und 2b erörtert, macht sich eine solche Antriebsüberlast in der Regel durch ein Absinken der Drehzahl des Antriebs oder gar durch einen Stillstand des Antriebs bemerkbar. Daher ist bevorzugt vorgesehen, dass die Antriebsanordnung 27 einen Motor 27a aufweist und dass die Steueranordnung 6 dazu eingerichtet ist, bei Unterschreiten einer Schnellstopp-Mindestdrehzahl durch den Motor 27a und alternativ oder zusätzlich bei einem Abschalten des Motors 27a - welches Abschalten ja zu einer Verminderung der Drehzahl des Motors 27a auf Null führt - den Schnellstoppvorgang auszulösen.

Die Antriebsüberlast kann sich aber nicht nur an dem Motor 27a der Antriebsanordnung 27 bemerkbar machen, sondern auch an einem Getriebe der Antriebsanordnung 27. Hier wird regelmäßig eine Riemenkupplung 28 - welche nur blockartig dargestellt ist - verwendet, deren Schlupf darüber Aufschluss gibt, wie nahe man an einem Grenzbereich der durch die Riemenkupplung 28 übertragbaren Kraft arbeitet. Folglich ist es bevorzugt, dass die Antriebsanordnung 27 zum Antreiben des Dreschwerks 2 eine Riemenkupplung 28 aufweist und dass die Steueranordnung 6 dazu eingerichtet ist, den Schnellstoppvorgang auszuführen, wenn ein Schlupf der Riemenkupplung 28 einen Schlupfgrenzwert überschreitet. Auf diese Weise wird das Dreschwerk 2 entlastet. Alternativ oder zusätzlich kann die obige Antriebsüberlast auch durch eine Drehmomentmessung ermittelt werden, so etwa durch einen bereits oben genannten Sensor zum Erfassen des Drehmoments.

Es gibt auch Situationen, in welchen prinzipiell kein Risiko eines Erntegutstaus durch eine zu große Zufuhr von Erntegut von der Vorsatzanordnung 5 besteht. Wenn etwa die Vorsatzanordnung 5 bereits seit ausreichender Zeit vor dem Bedienereignis abgeschaltet war oder sich außerhalb einer Arbeitsposition befand, dann kann kein Erntegut mehr von dort an das Dreschwerk 2 zugeführt werden. Daher ist gemäß einer bevorzugten Ausführungsform vorgesehen, dass der Erntegutverarbeitungszustand darauf basiert, wie lange vor dem Bedienereignis die Vorsatzanordnung 5 außerhalb einer Arbeitsposition und/oder abgeschaltet war. Speziell kann die Steueranordnung 6 dazu eingerichtet sein, die Förderzuführrate auf einen Konstantwert, insbesondere Null, anzusetzen, ggf. ohne spezielle Messung derselben, wenn die Vorsatzanordnung 5 eine Mindestauszeit vor dem Bedienereignis außerhalb der Arbeitsposition und/oder abgeschaltet war. Eine solche Mindestauszeit kann beispielhaft in der Größenordnung von einigen Minuten liegen. Nach einer Variante kann die Steueranordnung 6 dieses verzögerte Abschalten des Dreschwerks 2 in diesen Situationen sogar unterdrücken.

Vorzugsweise besteht stets die Möglichkeit, das Dreschwerk 2 ohne Verzögerung abzuschalten, wenn Schäden aus einem weiteren Nachlauf des Dreschwerks 2 drohen, und zwar insbesondere dann, wenn diese Schäden schwerwiegender als ein Erntegutstau sein könnten. Ein solches Abschalten des Dreschwerks 2 ohne Verzögerung erfolgt bevorzugterweise auch in dem Fall, dass das Dreschwerk 2 beim Wiedereinschalten stehen bleibt, was z.B. auch an einer Blockierung in der Antriebsanordnung 27 liegen kann. Daher ist es bevorzugt, dass die Steueranordnung 6 dazu eingerichtet ist, das Dreschwerk 2 unverzüglich abzuschalten, wenn bei einem Wiedereinschalten des Dreschwerks 2 das Dreschwerk 2 stehen bleibt. Ein solches Stehenbleiben kann vorzugsweise dann erkannt werden, wenn bei dem Wiedereinschalten des Dreschwerks 2 ein Schlupf der Riemenkupplung 28 einen Wiedereinschaltgrenzwert übersteigt. Zu berücksichtigen ist hierbei, dass während eines solchen Neustarts durch Überhitzung der Kraftschluss der Riemenkupplung 28 auch abnehmen kann. Weiter ist es bevorzugt, dass die Steueranordnung 6 dazu eingerichtet ist, in so einer Situation auch den Schnellstoppvorgang auszulösen.

Auch in Situationen, in denen kein Risiko eines Erntegutstaus im engeren Sinne mit der entsprechenden Verstopfung besteht, ist es dennoch ungünstig, wenn sich zum Zeitpunkt des Abschaltens des Dreschwerks 2 zu viel Erntegut in der Erntemaschine und speziell im Dreschwerk 2 befindet. Denn in so einem Fall kann die erhöhte Masse des Ernteguts allein durch ihre Trägheit ein Wiedereinschalten des Dreschwerks 2 so weit erschweren, dass auch hier zunächst eine zeitaufwendige Reinigung erforderlich wird. Hier ist also in erster Linie auf die insgesamt vorhandene Menge an Erntegut im Dreschwerk 2 oder auf die entsprechend verbleibende Menge an Erntegut nach dem Abschalten abzustellen, wofür das Volumen des Erntegutstrom an verschiedenen Stellen jedoch ebenfalls relevant ist. Bevorzugt und entsprechend basiert also der Erntegutverarbeitungszustand hier auf einer Erntegutmenge in der Erntemaschine und insbesondere im Dreschwerk 2. Speziell kann die Steueranordnung 6 dazu eingerichtet sein, auf das Bedienereignis ab einer kritischen Erntegutmenge in der Erntemaschine das Dreschwerk 2 verzögert abzuschalten und/oder den Schnellstoppvorgang auszulösen.

Ebenso wie die oben genannte Förderzuführrate kann auch die Erntegutmenge prinzipiell direkt erfasst oder errechnet werden. Bevorzugt ist es aber, bei der Beurteilung der Erntegutmenge auf einen Indikator abzustellen, aus welchem auf die Erntegutmenge in der Erntemaschine geschlossen werden kann. So kann der bloße Umstand, dass die Vorsatzanordnung 5 zum Bedienereignis eingeschaltet war, ein solcher Indikator sein und dafür ausreichen, ein verzögertes Abschalten des Dreschwerks 2 vorzusehen. Daher ist es bevorzugt, dass die Steueranordnung 6 dazu eingerichtet ist, auf das Bedienereignis das Dreschwerk 2 verzögert abzuschalten und/oder den Schnellstoppvorgang auszulösen, wenn die Vorsatzanordnung 5 zum Bedienereignis eingeschaltet ist.

Dass sich die Vorsatzanordnung 5 in einer Arbeitsposition befindet, kann dabei genau so bewertet werden wie der obige eingeschaltete Zustand der Vorsatzanordnung 5. Folglich ist es bevorzugt, dass die Steueranordnung 6 dazu eingerichtet ist, auf das Bedienereignis das Dreschwerk 2 verzögert abzuschalten und/oder den Schnellstoppvorgang auszulösen, wenn sich die Vorsatzanordnung 5 zum Bedienereignis in einer Arbeitsposition befindet.

Eine andere Möglichkeit, Aufschluss über das Vorliegen einer kritischen Erntegutmenge in der Erntemaschine zu erhalten besteht darin, auf einen in der Regel bereits vorhandenen Sensor zurückzugreifen, wobei sich hier insbesondere der oben genannte Schichthöhensensor 18 anbietet. Der Schichthöhensensor 18 in der Fig. 1 misst zunächst den Erntegutstrom über den Schrägförderer 17. Die ermittelte Erntegutmenge in der Erntemaschine kann dabei einerseits auf einem gemessenen Momentwert des Schichthöhensensors 18 basieren als auch andererseits das Ergebnis eines Messverlaufs des Schichthöhensensors 18, z.B. im Rahmen einer Summierung, darstellen. Gemäß einer bevorzugten Ausgestaltung weist also die Erntemaschine einen Sensor und insbesondere einen Schichthöhensensor 18 auf, wobei die Steueranordnung 6 dazu eingerichtet ist, auf das Bedienereignis das Dreschwerk 2 verzögert abzuschalten und/oder den Schnellstoppvorgang auszulösen, wenn der Sensor das Überschreiten eines Grenzwertes und insbesondere das Überschreiten einer Grenzschichthöhe erfasst. Wie bereits erwähnt, kann sich dieser Grenzwert auch auf eine Summenbildung der erfassten Werte beziehen.

Schließlich kann auch, wie bereits oben für die Ausführung der Schnellstopproutine beschrieben, auf die Auslastung des Motors 27a der Antriebsanordnung 27 abgestellt werden, um das Vorliegen einer kritischen Erntegutmenge in der Erntemaschine zu ermitteln. Hier ist es also bevorzugt, dass die Steueranordnung 6 dazu eingerichtet ist, auf das Bedienereignis das Dreschwerk 2 verzögert abzuschalten und/oder den Schnellstoppvorgang auszulösen, wenn eine Motorauslastung der Erntemaschine eine Grenzauslastung überschreitet. Es kann analog zu der obigen Darstellung hinsichtlich des Auslösens der Schnellstopproutine davon ausgegangen werden, dass eine kritische Erntegutmenge vorhanden ist, wenn vorzugsweise eine Last-Mindestdrehzahl durch den Motor 27a der Antriebsanordnung 27 unterschritten ist. Dabei ist diese Last-Mindestdrehzahl grundsätzlich beliebig wählbar, kann aber insbesondere identisch zu der obigen Schnellstopp-Mindestdrehzahl sein.

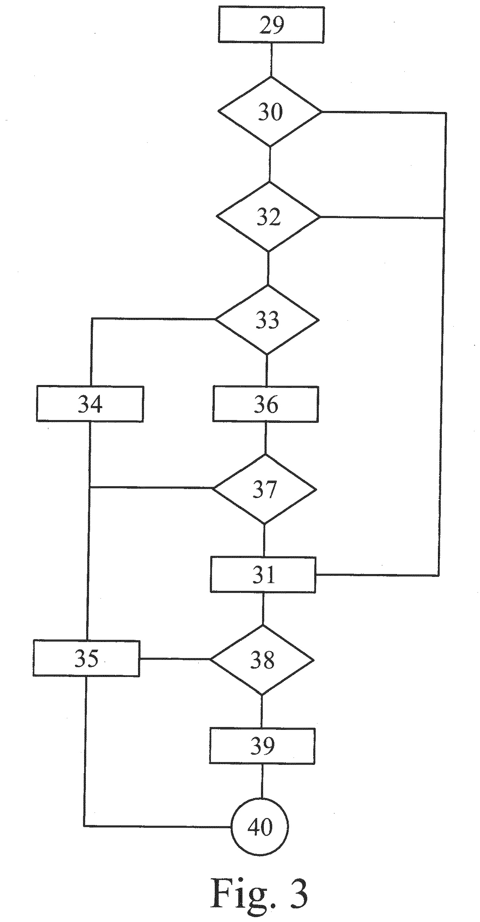

Die Fig. 3 wiederum zeigt ein beispielhaftes Flussdiagramm eines Ablaufs bei einer Erntemaschine entsprechend Fig. 1, nach welchem Ablauf eine Steueranordnung 6 einer vorschlagsgemäßen Erntemaschine eine Entscheidung darüber treffen könnte, ob zu einem Bedienereignis zum Abschalten des Dreschwerks 2 der Schnellstoppvorgang ausgeführt wird und ob das besagte Abschalten des Dreschwerks 2 zeitverzögert erfolgt.

Im Startschritt 29 wird durch den Bediener das Bedienereignis zum Abschalten des Dreschwerks 2 ausgelöst. Im darauf folgenden ersten Vorsatz-Prüfungsschritt 30 wird durch die Steueranordnung 6 überprüft, ob sich die Vorsatzanordnung 5 seit mindestens fünf Minuten außerhalb einer Arbeitsposition befand. Wenn die Vorsatzanordnung 5, für mindestens diese Zeit außerhalb der Arbeitsposition war, dann ist weder ein Schnellstoppvorgang noch das Erfassen einer Förderzuführrate erforderlich. Somit geht es weiter zum ersten Motorlasterfassungsschritt 31.

War die Vorsatzanordnung nicht für mindestens fünf Minuten außerhalb der Arbeitsposition, dann wird im zweiten Vorsatz-Prüfungsschritt 32 ermittelt, ob die Vorsatzanordnung 5 seit mindestens fünf Minuten abgeschaltet war. Falls dies der Fall ist, kann entsprechend zum ersten Vorsatz-Prüfungsschritt 30 gleich zum Motorauslasterfassungsschritt 31 fortgeschritten werden, da die unten stehend beschriebene Ermittlung des Erntegutstroms auf dem Schrägförderer 17 bzw. der Förderzuführrate durch den Schichthöhensensor 18 dann ebenfalls überflüssig ist.

Ansonsten geht es weiter zum Erntegutstromvergleichsschritt 33. In dem wird die Förderzuführrate der Vorsatzanordnung 5 zum Dreschwerk 2, beispielsweise auf Grundlage des Schichthöhensensors 18, sowie die Erntegutbewegungsrate ab dem Dreschwerk 2, z.B. durch eine sensorische Erfassung der Teilströme aus dem Dreschwerk 2, ermittelt und geprüft, ob die Förderzuführrate die Erntegutbewegungsrate in dem Sinne übersteigt, dass bei einem Abschalten des Dreschwerks 2 ohne Verzögerung ein Erntegutstau auftreten kann. Wenn ein solches Übersteigen vorliegt, wird in dem Schnellstoppauslöseschritt 34 der Schnellstoppvorgang ausgelöst. Von da aus geht es weiter zum Verzögerungsschritt 35, in welchem das Dreschwerk 2 von der Steueranordnung 6 verzögert abgeschaltet wird, um einen Erntegutstau zu verhindern.

Wurde in dem Erntegutvergleichsschritt 33 keine Notwendigkeit zum Auslösen des Schnellstoppvorgangs ermittelt, so wird in dem Normalstoppschritt 36 ein regulärer Anhaltevorgang der Vorsatzanordnung 5 ausgelöst. Im sich anschließenden Schichthöhenerfassungsschritt 37 wird geprüft, ob basierend auf einer aktuellen oder vergangenen Messung des Schichthöhensensors 18 von einer erhöhten Erntegutmenge in der Erntemaschine ausgegangen werden kann. Falls ja, wird zum Verzögerungsschritt 35 mit der entsprechenden verzögerten Abschaltung des Dreschwerks 2 weitergegangen.

Ansonsten geht es weiter zum Motorlasterfassungsschritt 31, in welchem anhand einer Motorauslastung ermittelt wird, ob die Erntegutmenge in der Erntemaschine eine verzögerte Abschaltung des Dreschwerks 2 erfordert. Dazu wird im Drehzahlprüfschritt 38 geprüft, ob die Drehzahl des Motors 27a der Antriebsanordnung 27 die Last-Mindestdrehzahl unterschreitet. Falls dies der Fall ist, wird im Verzögerungsschritt 35 das Dreschwerk 2 verzögert abgeschaltet. Ansonsten wird im Normalschaltschritt 39 das Dreschwerk 2 ohne Verzögerung abgeschaltet. In jedem Fall endet der Ablauf anschließend im Endschritt 40.

## Patentansprüche

1. Selbstfahrende Erntemaschine, insbesondere Mähdrescher (1), mit einem Dreschwerk (2), einer dem Dreschwerk (2) fördertechnisch vorgelagerten Vorsatzanordnung (5) und einer Steueranordnung (6),
**dadurch gekennzeichnet,**
**dass** die Steueranordnung (6) dazu eingerichtet ist, das Dreschwerk (2), oder das Dreschwerk (2) und die Vorsatzanordnung (5) auf ein Bedienereignis abzuschalten, wobei das Bedienereignis eine benutzerausgelöste Abschaltung des Dreschwerks ist, wobei das Abschalten des Dreschwerks (2), oder des Dreschwerks (2) und der Vorsatzanordnung (5) in Abhängigkeit von einem aktuellen Erntegutverarbeitungszustand der Erntemaschine erfolgt,
und wobei die Steueranordnung (6) dazu eingerichtet ist, einen Abschaltzeitpunkt des Dreschwerks (2) und/oder der Vorsatzanordnung (5) auf das Bedienereignis in Abhängigkeit von dem aktuellen Erntegutverarbeitungszustand zu bestimmen.

2. Erntemaschine nach Anspruch 1, **dadurch gekennzeichnet, dass** der Erntegutverarbeitungszustand anhand eines Erntegutstroms, einer Menge Erntegut in der Erntemaschine, und/oder einer Verteilung des Erntegutes in der Erntemaschine ermittelt wird.

3. Erntemaschine nach einem der vorherigen Ansprüche, **dadurch gekennzeichnet, dass** der Erntegutverarbeitungszustand anhand
• der Erntegutmenge, welche von einem Schneidwerk (13) und einem Schrägförderer (17) der Vorsatzanordnung (5) dem Dreschwerk (2) in einem Zeitintervall zugeführt wird, oder
anhand
• der Erntegutmenge, welche von dem Schneidwerk (13) und dem Schrägförderer (17) der Vorsatzanordnung (5) dem Dreschwerk (2) in dem Zeitintervall zugeführt wird, und
• der Erntegutmenge oder dem Erntegutstrom, welche in dem Zeitintervall ab dem Dreschwerk (2) in der Erntemaschine weitertransportiert wird,
ermittelt wird.

4. Erntemaschine nach einem der vorherigen Ansprüche, **dadurch gekennzeichnet, dass** der Erntegutverarbeitungszustand in Abhängigkeit von einer Erntegutmenge in der Erntemaschine, insbesondere im Dreschwerk (2), ermittelt wird, wobei die Steueranordnung (6) dazu eingerichtet ist, auf das Bedienereignis ab einer kritischen Erntegutmenge in der Erntemaschine das Dreschwerk (2) verzögert abzuschalten und/oder einen Schnellstoppvorgang auszulösen.

5. Erntemaschine nach Anspruch 4, **dadurch gekennzeichnet, dass** die Steueranordnung (6) dazu eingerichtet ist, auf das Bedienereignis das Dreschwerk (2) verzögert abzuschalten und/oder den Schnellstoppvorgang auszulösen, wenn die Vorsatzanordnung (5) zum Bedienereignis eingeschaltet ist.

6. Erntemaschine nach Anspruch 4 oder 5, **dadurch gekennzeichnet, dass** die Steueranordnung (6) dazu eingerichtet ist, auf das Bedienereignis das Dreschwerk (2) verzögert abzuschalten und/oder den Schnellstoppvorgang auszulösen, wenn sich die Vorsatzanordnung (5) zum Bedienereignis in einer Arbeitsposition befindet.

7. Erntemaschine nach einem der Ansprüche 4 bis 6, **dadurch gekennzeichnet, dass** die Erntemaschine einen Sensor, insbesondere Schichthöhensensor (17), aufweist und dass die Steueranordnung (6) dazu eingerichtet ist, auf das Bedienereignis das Dreschwerk (2) verzögert abzuschalten und/oder den Schnellstoppvorgang auszulösen, wenn der Sensor das Überschreiten eines Grenzwertes, insbesondere einer Grenzschichthöhe, erfasst.

8. Erntemaschine nach einem der Ansprüche 4 bis 7, **dadurch gekennzeichnet, dass** die Steueranordnung (6) dazu eingerichtet ist, auf das Bedienereignis das Dreschwerk (2) verzögert abzuschalten und/oder den Schnellstoppvorgang auszulösen, wenn eine Motorauslastung der Erntemaschine eine Grenzauslastung überschreitet.

9. Erntemaschine nach einem Anspruch 8, **dadurch gekennzeichnet, dass** die Steueranordnung (6) dazu eingerichtet ist, auf das Bedienereignis das Dreschwerk (2) verzögert abzuschalten und/oder den Schnellstoppvorgang auszulösen, wenn eine Last-Mindestdrehzahl durch einen Motor (27a) einer Antriebsanordnung (27) unterschritten ist.

10. Erntemaschine nach Anspruch 4, **dadurch gekennzeichnet, dass** die Steueranordnung (6) dazu eingerichtet ist, auf das Bedienereignis das Dreschwerk (2) verzögert abzuschalten, wenn die Erntegutmenge, welche von dem Schneidwerk (13) und dem Schrägförderer (17) der Vorsatzanordnung (5) dem Dreschwerk (2) in einem Zeitintervall zugeführt wird, die Erntegutmenge oder den Erntegutstrom, welche in dem Zeitintervall ab dem Dreschwerk (2) in der Erntemaschine weitertransportiert wird, übersteigt.

11. Erntemaschine nach Anspruch 7, **dadurch gekennzeichnet, dass** sie einen Schichthöhensensor (18) zur Erfassung der Erntegutmenge, welche von dem Schneidwerk (13) und dem Schrägförderer (17) der Vorsatzanordnung (5) dem Dreschwerk (2) in dem Zeitintervall zugeführt wird, aufweist.

## Claims

1. A self-propelled harvester, in particular a combine harvester (1), comprising a threshing mechanism (2), a front attachment arrangement (5) disposed in front of the threshing mechanism (2) in conveyor relationship and a control arrangement (6),
**characterised in that**
the control arrangement (6) is adapted to shut down the threshing mechanism (2) or the threshing mechanism (2) and the front attachment arrangement (5) in response to an operating event, wherein the operating event is a user-triggered shut-down of the threshing mechanism, wherein the shut-down of the threshing mechanism (2) or the threshing mechanism (2) and the front attachment arrangement (5) is effected in dependence on a currently prevailing crop material processing condition of the harvester, and wherein the control arrangement (6) is adapted to determine a shut-down time of the threshing mechanism (22) and/or the front attachment arrangement (5) in response to the operating event in dependence on the currently prevailing crop material processing condition.

2. A harvester according to claim 1 **characterised in that** the crop material processing condition is ascertained on the basis of a crop material flow, an amount of crop material in the harvester and/or a distribution of the crop material in the harvester.

3. A harvester according to one of the preceding claims **characterised in that** the crop material processing condition is ascertained on the basis of:
• the crop material amount which is fed from a cutting mechanism (13) and an inclined conveyor (17) of the front attachment arrangement (5) to the threshing mechanism (2) in a time interval, and/or
on the basis of
• the crop material amount which is fed from the cutting mechanism (13) and the inclined conveyor (17) of the front attachment arrangement (5) to the threshing mechanism (2) in the time interval and
• the crop material amount or the crop material flow which is further transported in the time interval from the threshing mechanism (2) in the harvester.

4. A harvester according to one of the preceding claims **characterised in that** the crop material processing condition is ascertained in dependence on a crop material amount in the harvester, in particular in the threshing mechanism (2), wherein the control arrangement (6) is adapted to shut down the threshing mechanism (2) with a delay in response to the operating event as from a critical crop material amount in the harvester and/or to trigger a quick-stop operation.

5. A harvester according to claim 4 **characterised in that** the control arrangement (6) is adapted to shut down the threshing mechanism (2) with a delay in response to the operating event and/or to trigger the quick-stop operation if the front attachment arrangement (5) is switched on at the operating event.

6. A harvester according to claim 4 or claim 5 **characterised in that** the control arrangement (6) is adapted to shut down the threshing mechanism (2) with a delay in response to the operating event and/or to trigger the quick-stop operation if the front attachment arrangement (5) is in a working position at the operating event.

7. A harvester according to one of claims 4 to 6 **characterised in that** the harvester has a sensor, in particular a layer height sensor (17), and that the control arrangement (6) is adapted to shut down the threshing mechanism (2) with a delay in response to the operating event and/or to trigger the quick-stop operation if the sensor detects a limit value, in particular a limit layer height, being exceeded.

8. A harvester according to one of claims 4 to 7 **characterised in that** the control arrangement (6) is adapted to shut down the threshing mechanism (2) with a delay in response to the operating event and/or to trigger the quick-stop operation if an engine loading of the harvester exceeds a limit loading.

9. A harvester according to claim 8 **characterised in that** the control arrangement (6) is adapted to shut down the threshing mechanism (2) with a delay in response to the operating event and/or to trigger the quick-stop operation if an engine (27a) of a drive arrangement (6) falls below a load minimum speed.

10. A harvester according to claim 4 **characterised in that** the control arrangement (6) is adapted to shut down the threshing mechanism (2) with a delay in response to the operating event if the crop material amount which is fed from the cutting mechanism (13) and the inclined conveyor (17) of the front attachment arrangement (5) to the threshing mechanism (2) in a time interval exceeds the crop material amount or the crop material flow which is further transported in the time interval from the threshing mechanism (2) in the harvester.

11. A harvester according to claim 7 **characterised in that** it has a layer height sensor (18) for detecting the crop material amount which is fed from the cutting mechanism (13) and the inclined conveyor (17) of the front attachment arrangement (5) to the threshing mechanism (2) in the time interval.

## Revendications

1. Machine de récolte automotrice, en particulier moissonneuse-batteuse (1), comprenant un système de battage (2), un équipement frontal (5) monté devant le système de battage (2) aux fins de convoyage et un agencement de commande (6), **caractérisée en ce que** l'agencement de commande (6) est conçu pour mettre hors service le système de battage (2), ou le système de battage (2) et l'équipement frontal (5), à la suite d'un événement opérateur, l'événement opérateur étant une mise hors service du système de battage déclenchée par l'utilisateur, la mise hors service du système de battage (2), ou du système de battage (2) et de l'équipement frontal (5), s'effectuant en fonction d'un état instantané de traitement du produit récolté par la machine de récolte, et l'agencement de commande (6) étant conçu pour déterminer un moment de mise hors service du système de battage (2) et/ou de l'équipement frontal (5) à la suite de l'événement opérateur en fonction de l'état instantané de traitement du produit récolté.

2. Machine de récolte selon la revendication 1, **caractérisée en ce que** l'état de traitement du produit récolté est déterminé sur la base d'un flux de produit récolté, d'une quantité de produit récolté dans la machine de récolte et/ou d'une répartition du produit récolté dans la machine de récolte.

3. Machine de récolte selon une des revendications précédentes, **caractérisée en ce que** l'état de traitement du produit récolté est déterminé sur la base
• de la quantité de produit récolté qui est amenée au système de battage (2) dans un intervalle de temps par un tablier de coupe (13) et par un convoyeur incliné (17) de l'équipement frontal (5), ou
sur la base
• de la quantité de produit récolté qui est amenée au système de battage (2) dans un intervalle de temps par le tablier de coupe (13) et par le convoyeur incliné (17) de l'équipement frontal (5) et
• de la quantité de produit récolté ou du flux de produit récolté qui est acheminé dans la machine de récolte dans un intervalle de temps à partir du système de battage (2).

4. Machine de récolte selon une des revendications précédentes, **caractérisée en ce que** l'état de traitement du produit récolté est déterminé en fonction d'une quantité de produit récolté dans la machine de récolte, en particulier dans le système de battage (2), l'agencement de commande (6) étant conçu pour mettre le système de battage (2) hors service de manière différée et/ou pour déclencher une procédure d'arrêt immédiat à la suite de l'événement opérateur à partir d'une quantité critique de produit récolté dans la machine de récolte.

5. Machine de récolte selon la revendication 4, **caractérisée en ce que** l'agencement de commande (6) est conçu pour mettre le système de battage (2) hors service de manière différée et/ou pour déclencher la procédure d'arrêt immédiat à la suite de l'événement opérateur lorsque l'équipement frontal (5) est en service au moment de l'événement opérateur.

6. Machine de récolte selon la revendication 4 ou 5, **caractérisée en ce que** l'agencement de commande (6) est conçu pour mettre le système de battage (2) hors service de manière différée et/ou pour déclencher la procédure d'arrêt immédiat à la suite de l'événement opérateur lorsque l'équipement frontal (5) se trouve dans une position de travail au moment de l'événement opérateur.

7. Machine de récolte selon une des revendications 4 à 6, **caractérisée en ce que** la machine de récolte comporte un capteur, en particulier un capteur de hauteur de couche (17), et **en ce que** l'agencement de commande (6) est conçu pour mettre le système de battage (2) hors service de manière différée et/ou pour déclencher la procédure d'arrêt immédiat à la suite de l'événement opérateur lorsque le capteur détecte le dépassement d'une valeur limite, en particulier d'une hauteur de couche limite.

8. Machine de récolte selon une des revendications 4 à 7, **caractérisée en ce que** l'agencement de commande (6) est conçu pour mettre le système de battage (2) hors service de manière différée et/ou pour déclencher la procédure d'arrêt immédiat à la suite de l'événement opérateur lorsqu'une charge moteur de la machine de récolte dépasse une charge limite.

9. Machine de récolte selon une revendication 8, **caractérisée en ce que** l'agencement de commande (6) est conçu pour mettre le système de battage (2) hors service de manière différée et/ou pour déclencher la procédure d'arrêt immédiat à la suite de l'événement opérateur lorsqu'un régime minimal en charge est soupassé par un moteur (27a) d'un agencement d'entraînement (27).

10. Machine de récolte selon la revendication 4, **caractérisée en ce que** l'agencement de commande (6) est conçu pour mettre le système de battage (2) hors service de manière différée à la suite de l'événement opérateur lorsque la quantité de produit récolté, qui est amenée au système de battage (2) par le tablier de coupe (13) et le convoyeur incliné (17) de l'équipement frontal (5) dans un intervalle de temps, excède la quantité de produit récolté ou le flux de produit récolté qui est acheminé dans la machine de récolte à partir du système de battage (2) dans l'intervalle de temps.

11. Machine de récolte selon la revendication 7, **caractérisée en ce qu'**elle comporte un capteur de hauteur de couche (18) pour détecter la quantité de produit récolté qui est amenée au système de battage (2) dans l'intervalle de temps par le tablier de coupe (13) et par le convoyeur incliné (17) de l'équipement frontal (5).
